**Europäisches Patentamt**

**European Patent Office**

**Office européen des brevets**

(19)

(11) Veröffentlichungsnummer: **0 219 887**

**B1**

(12)

# EUROPÄISCHE PATENTSCHRIFT

(45) Veröffentlichungstag der Patentschrift:
**10.05.89**

(51) Int. Cl.⁴: **F 28 D 1/053**, F 24 D 3/16

(21) Anmeldenummer: **86115188.4**

(22) Anmeldetag: **07.05.86**

(54) **Strahlungs- und Konvektionsapparat.**

(30) Priorität: **09.05.85 NO 851849**

(43) Veröffentlichungstag der Anmeldung:
**29.04.87 Patentblatt 87/18**

(45) Bekanntmachung des Hinweises auf die Patenterteilung:
**10.05.89 Patentblatt 89/19**

(84) Benannte Vertragsstaaten:
**AT BE CH DE FR GB IT LI NL SE**

(56) Entgegenhaltungen:
**DE-A-2 803 980**
**FR-A-2 258 610**

(73) Patentinhaber: **Farex A/S, N-2043 Lindeberg (NO)**

(72) Erfinder: **Bakstad, Per, Töyenhögda 23, N-1487 Töyenhangen (NO)**

(74) Vertreter: **Roth, Ernst Adolf Michael, GÖTEBORGS PATENTBYRA AB Box 5005, S-402 21 Göteborg (SE)**

EP 0 219 887 B1

## Beschreibung

Die vorliegende Erfindung betrifft einen Strahlungs- und Konvektionsapparat für die Unterdeckenmontage in einem Raum bestehend aus zwei mit Abstand voneinander angeordneten Wärmeaustauschern die in wärmeleitender Berührung mit den vertikalen, Seitenwänden eines oben und unten offenen mit vertikalen Seitenwänden je eines zur Decke und nach unten offenen, von einem Luftstrom durchströmbaren Gehäuses angeordnet sind.

## Hintergrund der Erfindung

Es ist bekannt, Räume mit in Unterdeckenpaneele verlegte Rohrleitungen mit Warmwasser zu erwärmen. Ebenso ist es bekannt, Räume mit derartigen Paneelen zu kühlen, die Wärme von der Umgebung aufnehmen. Gewöhnlich ist das Kältemedium kaltes Wasser, mit einer Temperatur von etwa 12 - 16°C. Auf Grund der Kondensierungsgefahr der Feuchtigkeit in der Zimmerluft ist die Oberflächentemperatur der Rohrleitungen und der Paneele auf Temperaturwerte von 12 - 16°C begrenzt. Auch wenn in dem Raum Temperaturen so hoch wie 26°C vorkommen können, wird der Temperaturunterschied zwischen Raum und Paneel nur 10 - 15°C betragen und die Wärmeaufnahme verhältnismässig gering sein. Die Wärmeaufnahme ist auf etwa 80 watt/m$^2$ Paneelfläche begrenzt. Auf Grund dieser verhältnismässig geringen Wärmeaufnahme ist der Preis für Unterdeckenpaneele pro Watt Kühleffekt relativ hoch. Meistens müssen die Paneele nach der maximalen Kühlbelastung berechnet werden.

Durch die FR-A-2 258 610 sind Strahlungs- und Konvektionsapparate für Unterdeckenmontage bekannt bestehend aus Wärmetauscherrohre die in wärmeleitender Berührung mit den Gehäuseseitenwänden des Apparates stehen. Sowohl unten und oben offene wie geschlossene Gehäuse werden vorgeschlagen.

## Zweck und wichstigste Mermale der Erfindung

Zweck der Erfindung ist, einen Apparat der eingangs erwähnten Art zu schaffen, mit welchem es möglich ist, die Wärmeaufnahme bzw. -abgabe durch Strahlung mit direkter Kühlung bzw. Erwärmung durch Konvektion und Ventilation in ein und demselben Apparat zu kombinieren, wobei der Konvektionsluftstrom durch den Apparat mittels Induktion von Ventilationsluft unterstützt werden soll. Der Apparat soll dabei platzsparend, einfach und billig in der Herstellung sein.

Dies wurde erfindungsgemäss dadurch erreicht, dass die Wärmetauscher ein Rippenrohr aufweisen, dass die Seitenwände der Gehäuse mittels oberer und unterer Spannbügel zusammengehalten werden und dass die Gehäuse auf der der Decke abgewandten Seite eine Endwand aufweisen, die mittels Schnappverschlüssen an von den Spannbügeln abstehenden Flanschen auf Abstand von den unteren Endkanten der Seitenwände gehalten ist, wobei zwischen Gehäuse und Endwand Schlitze zum Durchsatz des in den Wärmetauschern gekühlten Luftstromes angeordnet sind und zwischen den Wärmetauschern ein Ventilationskanal gebildet ist, durch welchen der Raum über die Schlitze mit Zuluft gespeist werden kann.

## Beschreinbung der Zeichnungen

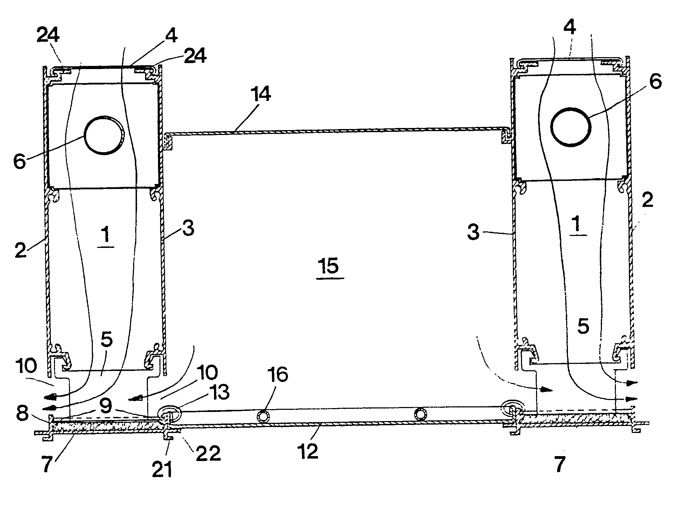

Die Erfindung wird im folgenden mit Hinweis auf die beigefügte Zeichnung näher beschrieben, welche als Ausführungsbeispiel einen vertikalen Schnitt durch einen Strahlungs- und Konvektionsapparat gemäss der Erfindung zeigt.

## Beschreibung des Ausführungsbeispieles

Der erfindungsgemässe Strahlungs- und Konnvektionsapparat ist ein aus Leichtmetallprofilen zusammengestellt, die ein oben und unten offenes Gehäuse 1, bilden dessen Seitenwände 2 und 3 mittels oberen und unteren Spannbügel 4 und 5 zusammengehalten werden. Ein Wärmeaustauscher in Form einer Rippenrohrbatterie 6 für ein Kühlmedium ist in wärmeleitendem Kontakt mit den Seitenwänden 2 und 3 angeordnet, welche von den Spannbügeln 4 und 5 gegen die Rippenrohrbatterie 6 gehalten werden.

Das Gehäuse 1 weist weiter eine untere Endwand 7 auf, die mittels Schnappverschlüsse 8 mit von den unteren Spannbügeln 5 abstehenden Flanschen 9 auf Abstand von den unteren Endkanten der Seitenwände 2 und 3 verbunden ist. Luft aus dem Raum kann somit durch das Gehäuse 1 längs dessen ganzer Länge hindurchpassieren und von der Rippenrohrbatterie 6 gekühlt werden, wonach die gekühlte Luft durch die Schlitze 10, die zwischen den unteren Kanten der Seitenwände 2 und 3 und der Endwand 7 vorgesehen sind, abgeht. Der Apparat fungiert somit als Strahlungs- und Konvektionsapparat. Die Endwand 7 ist trogförmig ausgebildet und in dieser kann eine wasserabsorbierende Matte 11 zur Aufnahme von eventuellem Kondenswasser angeordnet sein.

Aufhängevorrichtungen in Form von Pendeln für das Gehäuse 1 sind an Anschlussflansche 24 und Spannbügel 4 an den oberen Endkanten der Seitenwände 2 und 3 anschliessbar.

Zwei Gehäuse 1 sind mit Abstand voneinander vorgesehen und über ein Unterdeckenpaneel 12 mittels Spannbügeln 13 verbunden, sowie mit einer oberen Abdeckplatte 14 versehen. Der Raum zwischen zwei solchen Gehäusen 1 den Unterdeckenpaneelen 12 und unterhalb einer Abdeckplatte 14 bildet einen Ventilationskanal 15, durch welchen das Zimmer über ein nicht näher dargestelltes Gebläse mit Zuluft gespeist werden kann. Diese strömt in den Raum durch die Schlitze 10 im Gehäuse, wobei sie durch Induktion Luft durch das Gehäuse 1 mit sich zieht.

Eine Rohrschlinge 16 für ein Wärmemedium ist in wärmeleitender Berührung mit den Unterdeckenpaneel 12 angeordnet, so dass die Vorrichtung je nach Bedarf entweder zum Erwärmen oder Kühlen des Raumes angewandt werden kann. Zur Tageszeit liegt normalerweise in z. B. Büro-, Geschäfts- und Industrieräumen, ausser während kalter Wintertage, ein Wärmeüberschuss bei Tag und Nachts ein Wärmebedarf vor. Die Rohrschlingen 6 und 16 können vorzugsweise Bestandteile eines Wärmeaustauschsystems sein, so dass während der Tageszeit aufgenommener Wärmeüberschuss nachts zum Erwärmen der Räume angewandt werden kann.

**Patentansprüche**

1. Strahlungs- und Konvektionsapparat für die Unterdeckenmontage in einem Raum, bestehend aus zwei mit Abstand voneinander angeordneten Wärmetauschern (6), die in wärmeleitender Berührung mit vertikalen Seitenwänden (2, 3) je eines zur Decke und nach unten offenen, von einem Luftstrom durchströmbaren Gehäuses (1) angeordnet sind,
dadurch gekennzeichnet
dass die Wärmetauscher (6) ein Rippenrohr aufweisen, dass die Seitenwände (2, 3) der Gehäuse (1) mittels oberer und unterer Spannbügel (4, 5) zusammengehalten werden und dass die Gehäuse auf der der Decke abgewandten Seite eine Endwand (7) aufweisen, die mittels Schnappverschlüssen (8) an von den Spannbügeln (5) abstehenden Flanschen (9) auf Abstand von den unteren Endkanten der Seitenwände (2, 3) gehalten ist, wobei zwischen Gehäuse und Endwand Schlitze (10) zum Durchsatz des in den Wärmetauschern gekühlten Luftstromes angeordnet sind und zwischen den Wärmetauschern ein Ventilationskanal gebildet ist, durch welchen der Raum über die Schlitze (10) mit Zuluft gespeist werden kann.

2. Apparat nach Anspruch 1,
dadurch gekennzeichnet,
dass die Endwand (7) als Träger für mindestens ein an das Gehäuse (1) anschliessbares Unterdeckenpaneel (12) ausgebildet ist.

3. Apparat nach Anspruch 2,
dadurch gekennzeichnet,
dass die Unterdeckenpaneele (12) mit den Gehäusen (1) verbunden sind.

4. Apparat nach Anspruch 2 oder 3,
dadurch gekennzeichnet,
dass die Unterdeckenpaneele (12) als Wärmetauscher ausgebildet sind.

5. Apparat nach Anspruch 4,
dadurch gekennzeichnet,
dass zwischen zwei Gehäusen (1) oberhalb der Unterdeckenpaneele (12) eine Abdeckplatte (14) vorgesehen ist.

**Claims**

1. A radiation- and convection device arranged below the ceiling in a room and comprising two heat exchangers (6) arranged at a distance from each other, which are in heat-conducting contact with vertical side walls (2, 3) of a housing (1) each which is open to the ceiling and downwardly and through which an air stream can flow,
characterized in,
that the heat exchangers (6) are provided with a finned tube, that the side walls (2, 3) of the housing (1) are held together by upper and lower clamps (4, 5) and that the housings on the side facing away from the ceiling are provided with an end wall (7), which is kept at a distance from the lower end edges of the side walls (2, 3) by means of snap locks (8) on flanges (9) projecting from the clamp (5), at which slits (10) are provided between the housing and end wall for passage of the air stream cooled in the heat exchanger, and that between the heat exchangers there is provided a ventilation duct, through which the room is supplied with intake air via the slits (10).

2. A device as claimed in claim 1,
characterized in,
that the end wall (7) is designed as a holder for at least one ceiling panel (12) connectable to the housing (1).

3. A device as claimed in claim 2,
characterized in,
that the ceiling panel (12) is connected to the housing (1).

4. A device as claimed in claim 2 or 3,
characterized in,
that the ceiling panel (12) is designed as a heat exchanger.

5. A device as claimed in claim 4,
characterized in,
that a covering plate (14) is arranged between two housings (1) above the ceiling panel (12).

**Revendications**

1. Appareil à rayonnement et a convection, pour la pose au faux plafond d'une pièce, se composant de deux échangeurs de chaleur (6) disposés à distance l'un de l'autre, qui sont disposés en contact de conduction de chaleur avec des parois latérales verticales (2, 3) d'un boîtier associé (1), apte a être traversé par un courant d'air, ouvert vers le plafond et vers le bas, caractérisé par le fait que les échangeurs de chaleur (6) présentent un tube à ailettes, que les parois latérales (2, 3) des boîtiers (1) sont maintenues ensemble au moyen d'étriers de tension (4, 5) supérieurs et inférieurs, et que les boîtiers présentent, sur le côté opposé au plafond, une paroi d'extrémité (7), qui est maintenue, au moyen de fermetures encliquetables (8), sur des brides (9) s'écartant des étriers de tension (5), à distance des bords d'extrémité inférieurs des parois latérales (2, 3), des fentes (10) étant disposées entre boîtier et paroi d'extrémité pour le passage du courant d'air refroidi dans les échangeurs de chaleur, et un canal de ventilation étant formé entre les échangeurs de chaleur, par lequel la pièce peut être alimentée en air amené par l'intermédiaire des fentes (10).

2. Appareil selon la revendication 1, caractérisé par le fait que la paroi d'extrémité (7) et réalisée sous la forme d'un support pour au moins un panneau de lambris de faux plafond (12) pouvant être raccordé au boitier (1).

3. Appareil selon la revendication 2, caractérisé par le fait que les panneaux de lambris de faux plafond (12) sont reliés aux boîtiers (1).

4. Appareil selon l'une des revendications 2 ou 3, carictérisé par le fait que les panneaux de lambris de faux plafond (12) sont réalisés sous la forme d'échangeurs de chaleur.

5. Appareil selon la revendication 4, caractérisé par le fait qu'entre deux boîtiers (1), au-dessus des panneaux de lambris de faux plafond (12), est disposée une plaque de recouvrement (14).